# EUROPEAN PATENT SPECIFICATION

(11) **EP 4 172 014 B1**
(45) Date of publication and mention of the grant of the patent: **28.02.2024**
(21) Application number: 20735132.1
(22) Date of filing: 24.06.2020
(51) Int. Cl.: B60T 17/02, F04C 28/08

(54) **MOTOR VEHICLE VACUUM PUMP**
KRAFTFAHRZEUG-VAKUUMPUMPE
POMPE À VIDE DE VÉHICULE AUTOMOBILE

(43) Date of publication of application: 03.05.2023
(73) Proprietor: Pierburg Pump Technology GmbH, 41460 Neuss (DE)
(72) Inventor: PIOTROWSKI, Marcel, 41460 Neuss (DE); AL-HASAN, Nabil Salim, 41460 Neuss (DE); RUSS, Stanislaus, 41460 Neuss (DE); SCHULZ, Christian, 41460 Neuss (DE); GRÜNE, Tobias, 41460 Neuss (DE); STEPANOW, Michael, 41460 Neuss (DE)
(74) Representative: terpatent Patentanwälte und European Patent Attorneys ter Smitten Eberlein -Van Hoof
(86) International application number: PCT/EP2020/067665
(87) International publication number: WO 2021/259463

(56) References cited:
- EP-A1- 1 900 943
- WO-A1-2017/028839

## Description

The present invention is directed to a motor vehicle vacuum pump, in particular to an electric rotary vane vacuum pump for providing vacuum to a motor vehicle brake booster.

Electric vacuum pumps are driven by an electric motor and are typically used in motor vehicles for providing vacuum to a brake booster of a motor vehicle braking system, in particular for providing vacuum to a vacuum chamber of the brake booster. The electric vacuum pump can be the only vacuum source for the brake booster, or can be used in combination with other vacuum sources as for example an intake system of an internal combustion engine.

The brake booster utilizes the pressure difference between its vacuum chamber pressure and the surrounding atmospheric pressure to enhance a mechanic brake force which is generated by pressing the brake pedal of the motor vehicle and which mechanically actuates the motor vehicle braking system. Providing the brake booster vacuum chamber with an adequate vacuum is therefore crucial to ensure a reliable operation of the brake booster and, as a result, to ensure a reliable and convenient operation of the motor vehicle braking system.

Modern motor vehicle electric vacuum pumps are provided with an electronically commutated electric motor which is free of mechanically abrading brush contacts and which allows an electronical control of its rotational motor speed. This provides a relatively durable and efficient motor vehicle vacuum pump.

Such a motor vehicle vacuum pump is, for example, disclosed in WO 2017/028839 A1. The vacuum pump comprises a pumping unit with a rotatable pump rotor, and an electronically commutated electric motor for driving the pump rotor. The vacuum pump also comprises a pump control unit which provides closed-loop control of a rotational motor speed of the electric motor and therefore ensures a constant rotational motor speed even in case of load and/or supply voltage fluctuations.

Generally, the electric motor of such motor vehicle vacuum pumps is instantly switched off if the vacuum chamber pressure reaches a defined negative/difference pressure threshold. If the electric motor is switched off, the pump rotor is free-running and, as a result, can rotate backwards. This allows an abrupt pressure balance of the low-pressure suction side (including a significant part of the connection lines to the brake booster vacuum chamber) with the atmospheric-pressure discharge side via the pumping unit. The abrupt pressure balance causes a relatively high inflow velocity which can cause humidity and contaminations to be sucked into the motor vehicle vacuum pump from the ambient atmosphere. This can cause severe damage or even failure of the motor vehicle vacuum pump, in particular of the electric motor and the electric/electronic pump control unit. The abrupt pressure balance can also cause significant noise and the backward rotation of the pump rotor can cause damage of the electric motor and/or of the pumping unit.

An object of the present invention is therefore to provide a reliable and low-noise motor vehicle vacuum pump.

This object is achieved with a motor vehicle vacuum pump with the features of claim 1.

The motor vehicle vacuum pump according to the present invention is provided with a pumping unit with a rotatable pump rotor. Preferably, the vacuum pump is a vane pump wherein the pump rotor comprises a rotor body which is eccentrically arranged in a substantially cylindrical pumping chamber and which comprises several radially slidable rotor vanes. During pump operation, the rotor vanes are in touching radial contact with a pumping chamber sidewall and define several rotating pumping-chamber compartments whose volume varies within one pump rotor revolution.

The motor vehicle vacuum pump according to the present invention is also provided with an electronically commutated electric motor for driving the pump rotor. The electronically commutated electric motor allows to electronically control a variable rotational motor speed of the electric motor. Typically, the electronically commutated electric motor is energized with a pulse-width-modulated drive energy, wherein an effective electrical drive power and thereby the rotational motor speed is controlled by controlling a duty cycle of the pulse width modulation. Typically, the electric motor comprises an electromagnetic motor stator with at least one stator coil, and comprises a permanent-magnetic motor rotor which is co-rotatably connected with the pump rotor.

The motor vehicle vacuum pump according to the present invention is also provided with a pump control unit which is configured to control the variable rotational motor speed of the electric motor. Preferably, the pump control unit is configured to provide a closed-loop control of the rotational motor speed, i.e. the pump control unit is configured to continuously adapt a motor drive power based on a motor-speed feedback signal to realize a desired set motor speed. Typically, the pump control unit is configured to control the rotational motor speed based on a pressure parameter which is provided by a motor vehicle pressure sensor. Typically, the pressure parameter indicates a present negative pressure or, in other words, a present difference pressure of a vacuum chamber of a motor vehicle brake booster relative to a present atmospheric pressure, wherein a greater (positive) pressure parameter indicates a lower absolute vacuum chamber pressure and a lesser (positive) pressure parameter indicates a higher absolute vacuum chamber pressure. The pump control unit is typically configured to switch on the electric motor if the received pressure parameter is below a critical-pressure threshold, and is configured to shut down the electric motor in a controlled manner if the pressure parameter is equal to or greater than a target-pressure threshold.

According to the invention, the pump control unit comprises a deceleration map storage which stores a deceleration map with at least one time-dependent and/or motor-speed-dependent motor deceleration parameter. The deceleration map preferably comprises a plurality of time-dependent and/or motor-speed-dependent motor deceleration parameters. The at least one motor deceleration parameter can, for example, specify a target motor deceleration (negative physical motor acceleration), wherein the deceleration map also comprises one time parameter and/or one motor speed parameter for each deceleration parameter. The time parameter can define a timespan for which the respective deceleration parameter should be applied or can define a switching time point/threshold for the respective deceleration parameter. The motor speed parameter defines a switching point/threshold for the respective deceleration parameter. The deceleration parameter can also specify an absolute motor speed decrease for a time interval defined by the respective time parameter. It is also possible that the deceleration map comprises a plurality of time-dependent target motor speed values, wherein the target motor speed values specify an absolute rotational motor speed which should be realized at that time point which is specified by the respective time parameter. In any case, the deceleration map specifies a defined motor speed decrease. Preferably, the deceleration map specifies the motor speed decrease down to a motor speed of zero, i.e. down to the complete stop of the electric motor.

According to the invention, the pump control unit also comprises a rotor-stopping control module which is connected with the deceleration map storage and which is configured to actively control the variable rotational motor speed of the electric motor based on the deceleration map during a rotor stopping process. The rotor-stopping control module is triggered by the pump control unit for shutting down the electric motor in a controlled manner, e.g. if the pressure parameter is greater than the target-pressure threshold. The rotor-stopping control module is configured to provide an active control of the motor speed decrease based on the deceleration map. The rotor-stopping control module is in particular configured to determine an actual motor deceleration and to control the rotational motor speed in that way that the motor deceleration complies with a defined target motor deceleration. The rotor-stopping control module is configured to determine the target motor deceleration based on the deceleration map as well as a present time parameter and/or a present rotational motor speed. If the deceleration map specifies an absolute motor speed decrease for a defined time interval or specifies time-dependent target motor speed values, the target motor deceleration is that deceleration required to meet the specified absolute motor speed decrease or to meet the next target motor speed value at the specified time point.

The pump control unit according to the present invention provides a controlled, relatively smoothly stopping of the electric motor and thus of the pump rotor. This provides a controlled and, in particular, non-abrupt venting of the motor vehicle vacuum pump and thus reliably avoids a relatively high inflow velocity during the venting.

The pump control unit according to the present invention therefore avoids humidity and pollution being sucked into the motor vehicle vacuum pump and also reliably avoids a backward rotation of the pump rotor. The rotor-stopping control module according to the present invention also avoids significant noise caused by the abrupt venting of the motor vehicle vacuum pump. This provides a reliable and low-noise motor vehicle vacuum pump.

Rotary vane vacuum pumps comprise a pump rotor with several radially slidable rotor vanes. The rotor vanes are radially pressed against a pumping chamber wall to define several fluidically separated pumping chamber compartments circumferentially between them. The rotor vanes are pushed radially outwardly by the centrifugal force during pump rotor rotation. The contact pressure between the rotor vanes and the pumping chamber wall and thus the fluidic tightness of the pumping chamber compartments highly depends on the rotational speed of the pump rotor.

In a preferred embodiment of the present invention, the deceleration map therefore comprises at least two motor deceleration parameters, wherein the initial first deceleration parameter is greater than the subsequent second deceleration parameter. The deceleration map thus defines an initial first deceleration interval within which the electric motor is decelerated according to the relatively high first motor deceleration parameter, and defines a subsequent second deceleration interval within which the electric motor is decelerated according to the significantly lesser second motor deceleration parameter. The relatively high initial motor deceleration rapidly decelerates the electric motor and thus the pump rotor down to a rotational speed at which the contact pressure between the rotor vanes and the pumping chamber wall is that low that the pumping chamber compartments are not completely fluidically separated any more. The electric motor is thus rapidly decelerated down to a rotational motor speed at which a venting of the vacuum pump with ambient air via a relatively low "leakage flow" through the pumping unit is possible. The electric motor is than decelerated significantly slower during the second deceleration interval in order to provide a controlled venting of the vacuum pump via the relatively low pumping unit "leakage flow" and thus with a relatively low inflow velocity. Preferably, the second deceleration interval extends down to a rotational motor speed of zero so that the electric motor stands still at the end of the second deceleration interval. The two deceleration intervals with the different deceleration parameters provide a venting of the vacuum pump with a relatively low inflow velocity and also provide a relatively fast stopping of the electric motor. This provides a reliable and low-noise motor vehicle vacuum pump.

Preferably, the rotor-stopping control module is configured to cause the electric motor to actively hold the pump rotor in a defined static rotational position during a final phase of the rotor stopping process. The active holding of the pump rotor is typically realized by energizing the electric motor with a constant, non-commuted electric holding energy. The active holding of the pump rotor reliably avoids a backward rotation of the pump rotor caused by the "reverse" venting flow from the atmospheric-pressure discharge side to the low-pressure suction during the venting of the vacuum pump. The static, non-rotating pump rotor allows an air flow through the pumping chamber only via the "leakage flow" around the rotor vanes. This "leakage flow" is significantly lower compared to the venting flow rate which is allowed by a backward-rotating pump rotor. The active holding of the pump rotor thus provides a controlled, homogenous venting of the vacuum pump via the relatively low "leakage flow". The non-rotating pump rotor however provides a higher "leakage flow" compared to a slowly forward-rotating pump rotor because the rotor vanes are not pushed against the pumping chamber by the centrifugal force which is zero in this case. This allows a relatively short rotor stopping process. The rotor-stopping control module can be configured to always apply the pump rotor holding phase within each rotor stopping process, or, alternatively, can be configured to apply the pump rotor holding phase only selectively based on a respective predefined trigger parameter. This trigger parameter can, for example, be included in the deceleration map storage. The length of the pump rotor holding phase is preferably variable and can, for example, be defined by a respective holding length parameter being included in the deceleration map.

In a preferred embodiment of the present invention, the deceleration map defines a rotor stopping process with a total stopping process length of at least two seconds, preferably of at least five seconds. The relative long rotor process ensures a venting of the vacuum pump with a relatively low inflow velocity.

An embodiment of the present invention is described with reference to the enclosed drawings, wherein
figure 1 shows a schematic illustration of a part of a motor vehicle braking system with a motor vehicle brake booster and with a motor vehicle vacuum pump according to the present invention, and
figure 2 shows progressions of a target motor deceleration (top), a rotational motor speed (middle) and of a motor status S (bottom) for an exemplary rotor stopping process of the vacuum pump of figure 1.

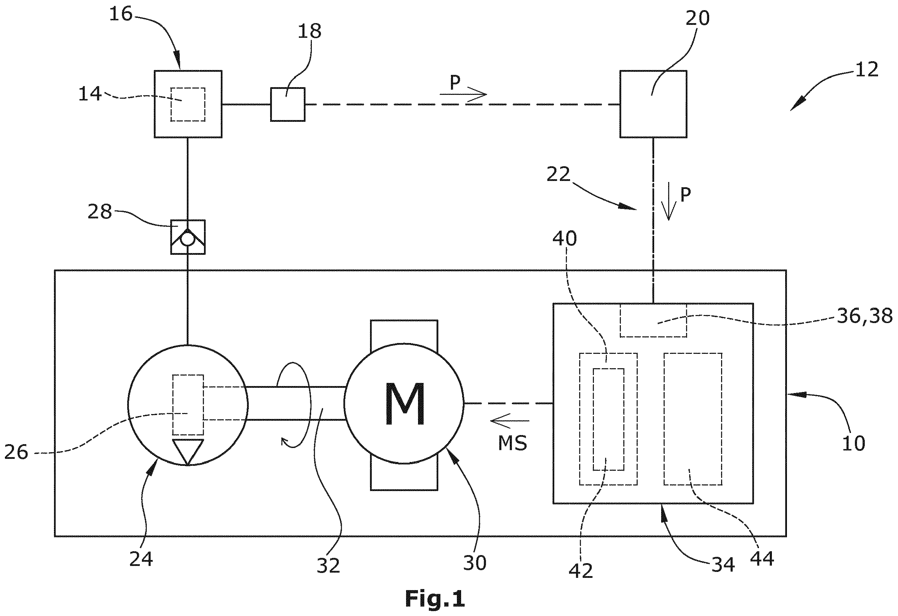

Fig. 1 shows a motor vehicle vacuum pump 10 which is used in a motor vehicle braking system 12 for providing a vacuum to a vacuum chamber 14 of a motor vehicle brake booster 16.

The motor vehicle braking system 12 also comprises a motor vehicle pressure sensor 18 which is fluidically connected to the vacuum chamber 14 and which is configured to measure a vacuum chamber difference pressure relative to atmospheric pressure. The motor vehicle pressure sensor 18 is furthermore configured to provide a pressure parameter P, which indicates the measured vacuum chamber difference pressure, to a motor vehicle control unit 20. The motor vehicle control unit 20 is connected to a vehicle data bus system 22 which is configured to allow a data communication between connected motor vehicle units.

The motor vehicle vacuum pump 10 comprises a pumping unit 24 with a rotatable pump rotor 26. In the present embodiment, the motor vehicle vacuum pump 10 is a rotary vane pump wherein the pump rotor 26 comprises a plurality of rotor vanes which are configured to be radially slidable and to rotate within a substantially cylindrical pumping chamber. The pumping unit 24 is fluidically connected to the vacuum chamber 14 of the motor vehicle brake booster 16 via a check valve 28. The pump unit 24 is configured to evacuate the vacuum chamber 14.

The motor vehicle vacuum pump 10 also comprises an electronically commutated electric motor 30 which is configured to drive the pump rotor 26 via a rotor shaft 32 which is co-rotatably connected with the pump rotor 26. The electric motor 30 is configure to be operated with a variable rotational motor speed MS.

The motor vehicle vacuum pump 10 also comprises a pump control unit 34 which is configured to provide a closed-loop control of the rotational motor speed MS of the electric motor 30. The pump control unit 34 is connected to the vehicle data bus system 22 via a vehicle-data-bus connector 36 which is configured to allow a data communication via the vehicle data bus system 22.

In the present embodiment, the pump control unit 34 is configured to periodically read out the pressure parameter P from the motor vehicle control unit 20 via the vehicle data bus system 22. The vehicle-data-bus connector 36 thus defines a pressure sensor connector 38 which is configured to receive the pressure parameter P provided by the motor vehicle pressure sensor 18. In an alternative embodiment, the pump control unit 34 can be directly electrically connected to the motor vehicle pressure sensor 18 via a separate pressure sensor connector.

The pump control unit 34 is configured to control the rotational motor speed MS based on the pressure parameter P during normal pump operation. The pump control unit 34 is in particular configured to switch on the electric motor 30 if the pressure parameter P is below a critical-pressure threshold, and is configured to shut down the electric motor 30 in a controlled manner if the pressure parameter P is equal to or higher than a target-pressure threshold.

According to the present invention, the pump control unit 34 comprises a deceleration map storage 40 which stores a deceleration map 42. In the present embodiment, the deceleration map comprises two deceleration parameters DP1,DP2 as well as two respective switching parameters SP1,SP2.

The first deceleration parameter DP1 specifies a relatively high first motor deceleration and the first switching parameter SP1 specifies a first motor speed threshold down to which the first deceleration parameter DP1 should be applied.

The second deceleration parameter DP2 specifies a second motor deceleration which is lower than the first motor deceleration, and the second switching parameter SP2 specifies a second motor speed threshold down to which the second deceleration parameter DP2 should be applied. In the present embodiment, the second switching parameter SP2 is zero so that the second deceleration parameter DP2 is applied until the electric motor 30 stands still.

The deceleration map 42 also comprises a holding length parameter HL which specifies a pump rotor holding phase length. In the present embodiment, the holding length parameter HL specifies a pump rotor holding phase length of five seconds.

According to the present invention, the pump control unit 34 also comprises a rotor-stopping control module 44 which is electrically connected with the deceleration map storage 40. The rotor-stopping control module 44 is configured to actively control the rotational motor speed MS based on the deceleration map 42 during a rotor stopping process RSP.

The rotor-stopping control module 44 is configured to monitor the rotational motor speed MS and to determine a motor deceleration MD by evaluating the temporal change of the rotational motor speed MS. The rotor-stopping control module 44 is furthermore configured to determine a target motor deceleration MDT based on the deceleration map 42 and the rotational motor speed MS.

The rotor-stopping control module 44 is configured to control the rotational motor speed MS in that way that the motor deceleration MD complies with the target motor deceleration MDT specified by the deceleration map 42.

The rotor-stopping control module 44 is furthermore configured to cause the electric motor 30 to actively hold the pump rotor 26 in a defined static rotational position during a final phase of the rotor stopping process RSP, wherein the length of the pump rotor holding phase is defined by the holding length parameter HL of the deceleration map 42.

According to the invention, the pump control unit 34 is configured to trigger the rotor-stopping control module 44 for shutting down the electric motor 30 in a controlled manner, in particular if the pressure parameter P is equal to or higher than the target-pressure threshold PT.

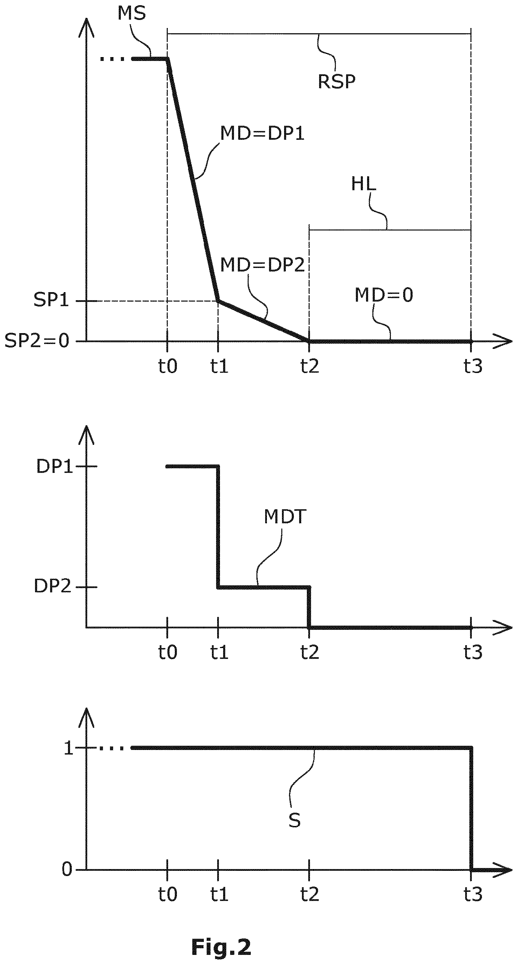

Fig. 2 shows progressions of the target motor deceleration MDT (top), the rotational motor speed MS (middle) and of a motor status S (bottom) for an exemplary rotor stopping process RSP, wherein the motor status S is one (S=1) if the electric motor is on and zero (S=0) if electric motor is off.

At time point t0, the pump control unit 34 starts the rotor stopping process RSP by triggering the rotor-stopping control module 44.

The rotor-stopping control module 44 initially sets the target motor deceleration MDT corresponding to the first deceleration parameter DP1 of the deceleration map 42 because the rotational motor speed MS at the time point t0 is higher than the first motor speed threshold specified by the first switching parameter SP1. At time point t0, the rotor-stopping control module 44 therefore starts to control the rotational motor speed MS in that way that the motor deceleration MD complies with the first deceleration parameter DP1.

At time point t1, the rotational motor speed MS reaches the first motor speed threshold specified by the first switching parameter SP1. At time point t1, the rotor-stopping control module 44 therefore sets the target motor deceleration MDT corresponding to the second deceleration parameter DP2 of the deceleration map 42 and thus starts to control the rotational motor speed MS in that way that the motor deceleration MD complies with the second deceleration parameter DP2.

At time point t2, the rotational motor speed MS reaches the second motor speed threshold specified by the second switching parameter SP2 which is the last switching parameter of the deceleration map 42. At time point t2, the rotor-stopping control module 44 therefore starts to cause the electric motor 30 to actively hold the pump rotor 26 at a defined static rotational position.

At time point t3, the pump rotor holding phase length specified by the holding length parameter HL is reached so that the rotor-stopping control module 44 completes the rotor stopping process RSP by switching off the electric motor 30.

### Reference List

- 10: motor vehicle vacuum pump
- 12: motor vehicle braking system
- 14: vacuum chamber
- 16: motor vehicle brake booster
- 18: motor vehicle pressure sensor
- 20: motor vehicle control unit
- 22: vehicle data bus system
- 24: pumping unit
- 26: pump rotor
- 28: check valve
- 30: electronically commutated electric motor
- 32: rotor shaft
- 34: pump control unit
- 36: vehicle-data-bus connector
- 38: pressure sensor connector
- 40: deceleration map storage
- 42: deceleration map
- 44: rotor-stopping control module

- DP: deceleration parameters
- HL: holding length parameter
- MD: motor deceleration
- MDT: target motor deceleration
- MS: rotational motor speed
- P: pressure parameter
- RSP: rotor stopping process
- S: motor status
- SP: switching parameters

## Claims

1. A motor vehicle vacuum pump (10), comprising
- a pumping unit (24) with a rotatable pump rotor (26),
- an electronically commutated electric motor (30) for driving the pump rotor (26), and
- a pump control unit (34) for controlling a variable rotational motor speed (MS) of the electric motor (30),
**characterised in that** the pump control unit (34) comprises
- a deceleration map storage (40) storing a deceleration map (42) with at least one time-dependent and/or motor-speed-dependent motor deceleration parameter (DP1,DP2), and
- a rotor-stopping control module (44) which is connected with the deceleration map storage (40) and which is configured to actively control the variable rotational motor speed (MS) based on the deceleration map (42) during a rotor stopping process (RSP).

2. The motor vehicle vacuum pump (10) according to claim 1, wherein the deceleration map (42) comprises at least two motor deceleration parameters (DP1,DP2), wherein the initial first deceleration parameter (DP1) is greater than the subsequent second deceleration parameter (DP2).

3. The motor vehicle vacuum pump (10) according to one of the preceding claims, wherein the rotor-stopping control module (44) is configured to cause the electric motor (30) to actively hold the pump rotor (26) in a defined static rotational position during a final phase of the rotor stopping process (RSP).

4. The motor vehicle vacuum pump (10) according to one of the preceding claims, wherein the deceleration map (42) defines a rotor stopping process (RSP) with a total stopping process length of at least two seconds, preferably of at least five seconds.

## Patentansprüche

1. Kraftfahrzeugvakuumpumpe (10), umfassend
- eine Pumpeinheit (24) mit einem drehbaren Pumpenrotor (26),
- einen elektronisch kommutierten Elektromotor (30) zum Antreiben des Pumpenrotors (26), und
- eine Pumpensteuereinheit (34) zum Steuern einer variablen Motordrehzahl (MS) des Elektromotors (30),
**dadurch gekennzeichnet, dass**
die Pumpensteuereinheit (34) umfasst
- einen Verzögerungskennfeldspeicher (40), der ein Verzögerungskennfeld (42) mit mindestens einem zeitabhängigen und/oder motordrehzahlabhängigen Motorverzögerungsparameter (DP1, DP2) speichert, und
- ein Rotorstoppsteuermodul (44), das mit dem Verzögerungskennfeldspeicher (40) verbunden und das eingerichtet ist, die variable Motordrehzahl (MS) während eines Rotorstoppvorgangs (RSP) basierend auf dem Verzögerungskennfeld (42) aktiv zu steuern.

2. Kraftfahrzeugvakuumpumpe (10) nach Anspruch 1, wobei das Verzögerungskennfeld (42) mindestens zwei Motorverzögerungsparameter (DP1, DP2) umfasst, wobei der anfängliche erste Verzögerungsparameter (DP1) größer als der nachfolgende zweite Verzögerungsparameter (DP2) ist.

3. Kraftfahrzeugvakuumpumpe (10) nach einem der vorhergehenden Ansprüche, wobei das Rotorstoppsteuermodul (44) eingerichtet ist, den Elektromotor (30) dazu zu bringen, den Pumpenrotor (26) während einer Endphase des Rotorstoppvorgangs (RSP) aktiv in einer definierten statischen Rotationsposition festzuhalten.

4. Kraftfahrzeugvakuumpumpe (10) nach einem der vorhergehenden Ansprüche, wobei das Verzögerungskennfeld (42) einen Rotorstoppprozess (RSP) mit einer Gesamtstoppprozesslänge von mindestens zwei Sekunden, vorzugsweise von mindestens fünf Sekunden, definiert.

## Revendications

1. Une pompe à vide de véhicule moteur (10), qui comprend
- une unité de pompage (24) avec un rotor de pompe rotatif (26),
- un moteur électrique (30) à commutation électronique pour entraîner le rotor de la pompe (26), et
- une unité de contrôle de pompe (34) pour contrôler une vitesse rotation moteur (MS) variable du moteur électrique (30),
- **caractérisée en ce que**
l'unité de contrôle de pompe (34) comprend
- une mémoire de schéma de décélération (40) stockant un schéma de décélération (42) avec au moins un paramètre de décélération du moteur (DP1,DP2) dépendant du temps et/ou de la vitesse du moteur, et
- un module de contrôle d'arrêt du rotor (44) qui est connecté à la mémoire de schéma de décélération (40) et qui est configuré pour contrôler activement la vitesse rotationnelle variable du moteur (MS) sur la base du schéma de décélération (42) pendant un processus d'arrêt du rotor (RSP).

2. La pompe à vide de véhicule moteur (10) selon la revendication 1, dans laquelle le schéma de décélération (42) comprend au moins deux paramètres de décélération du moteur (DP1,DP2), dans lequel le premier paramètre de décélération initial (DP1) est supérieur au deuxième paramètre de décélération ultérieur (DP2).

3. La pompe à vide de véhicule moteur (10) selon l'une des revendications précédentes, dans laquelle le module de contrôle d'arrêt du rotor (44) est configuré pour amener le moteur électrique (30) à maintenir activement le rotor de la pompe (26) dans une position de rotation statique définie pendant une phase finale du processus d'arrêt du rotor (RSP).

4. La pompe à vide de véhicule moteur (10) selon l'une des revendications précédentes, dans laquelle le schéma de décélération (42) définit un processus d'arrêt du rotor (RSP) d'une durée totale de processus d'arrêt d'au moins deux secondes, préférablement d'au moins cinq secondes.
